# EUROPEAN PATENT APPLICATION

(11) **EP 2 582 100 A1**
(43) Date of publication of application: **17.04.2013**
(21) Application number: 11792467.0
(22) Date of filing: 08.06.2011
(51) Int. Cl.: H04L 12/56

(54) **COMMUNICATION SYSTEM, CONTROL APPARATUS, PACKET CAPTURE METHOD AND PROGRAM**

(30) Priority: 08.06.2010 JP 2010131332
(71) Applicant: NEC Corporation, Tokyo 108-8001 (JP)
(72) Inventor: KUSUMOTO, Nobuhiro, Tokyo 108-8001 (JP)
(74) Representative: Vossius & Partner
(86) International application number: PCT/JP2011/063107
(87) International publication number: WO 2011/155510

(57) **Abstract**

A communication system can reliably capture a packet flowing through an arbitrary one of nodes. The communication system includes, in addition to nodes, a controller for setting, in each node, a processing rule that stipulates a matching rule and processing for a packet matching to the matching rule. Each node processes a received packet in accordance with the processing rule. At least one of the nodes is capable of performing mirroring of a received packet. For a flow satisfying a pre-set condition, the controller sets a processing rule to perform packet mirroring in an arbitrary node, while setting, in a node on a packet capture route reaching a pre-set mirror server, a processing rule that stipulates the processing to forward a mirrored packet.

## Description

### TECHNICAL FIELD

### [Cross-reference to related Applications]

The present application claims priority of Japanese Patent Application No.2410-131332, filed in Japan on June 8, 2010, the entirety of which is incorporated by reference herein.
This invention relates to a communication system, a control apparatus, a method for monitoring the traffic, and a program for monitoring the traffic. More particularly, it relates to a communication system containing a node that processes a received packet in accordance with a processing rule matched to the received packet, a control apparatus, a method for monitoring the traffic and a program for monitoring the traffic.

### BACKGROUND ART

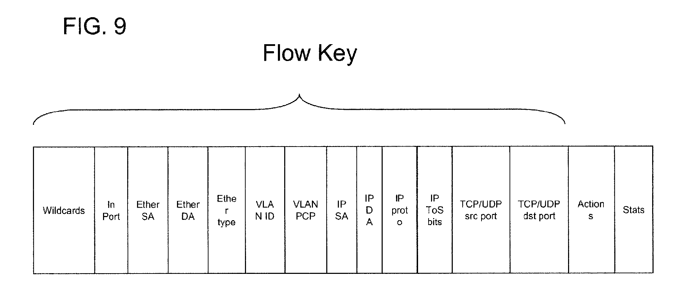

Recently, a technique called OpenFlow has been proposed (see Non-Patent Literatures 1 and 2). The OpenFlow grasps communication as end-to-end flow and effectuates path control and recovery from faults, as well as load balancing and optimization, on the flow-by-flow basis. The OpenFlow switch, operating as a forwarding node, includes a secure channel for communication with an OpenFlow controller, taken to be a control device, and is in operation in accordance with a flow table commanded from time to time by the OpenFlow controller for addition or rewriting. In the flow table, a plurality of sets each formed by a matching rule (collation rule) for matching to a packet header, an action (Action) that gives definition of processing contents, and the flow statistic information (Counter), are defined on the flow-by-flow basis (see Fig.9).

For example, if a packet has been received, the OpenFlow switch searches, from the flow table, an entry having the matching or collation rule matched to the header information of the packet received (see Flow Key of Fig.9). If, as a result of search, the entry that matches to the received packet is found, the OpenFlow switch updates the flow statistic information (counter), at the same time as it performs a processing of processing contents, stated in the entry's action field, on the received packet. On the other hand, if, as a result of the search, the entry matched to the received packet has not been found, the OpenFlow switch forwards the received packet over the secure channel to the OpenFlow controller to make a request to decide on a route for the packet based on the source as well as the destination of communication of the received packet. The OpenFlow switch receives a flow entry that may implement the route to update its flow table. The OpenFlow switch thus forwards the packet using the entry stored in the flow table as a processing rule.

In Patent Literature 1, there is disclosed a network monitor apparatus installed on and connected to a line branched from a trunk line to allow for acquisition of a packet flowing on a route being monitored.

In Patent Literature 2, there is disclosed a network processing system that is able to monitor IP traffic flowing on an IP network. The system is disposed at a specified position such as at a network boundary or at an access network end and includes a function to perform trap and trace on the IP communication flowing on the IP network.

### RELATED DOCUMENTS

### [Patent Literatures]

[Patent Literature 1] JP Patent Kokai Publication No.JP-P2009-253907A
[Patent Literature 2] JP Patent Kohyo Publication No.JP-P2006-513590A

### [Non-Patent Literatures]

[Non-Patent Literature 1] 3GPP TS 23.401 ver.9.3.0. "General Packet Radio Service (GPRS) enhancements for Evolved Universal Terrestrial Radio Access Network (E-UTRAN) access", retrieved June 3 Heisei22 (2010), Internet http://www.3gpp.org/ftp/Specs/archive/23_series/23.401/23401-930.zip [Non-Patent Literature 2] "OpenFlow Switch Specification" Version 1.0.0. (Wire Protocol 0x01)", retrieved June 3 Heisei22 (2010), Internet <URL: http://www.openflowswitch.org/documents/openflow-spec-v1.0.0.pdf>

### SUMMARY OF THE INVENTION

### PROBLEMS TO BE SOLVED BY THE INVENTION

The disclosures of the above Patent and Non-Patent Literatures are to be incorporated herein by reference. The following analysis is made by the present inventor.
If, in a routine network, packet capture is to be carried out to identify a cause of a network failure or to monitor communication contents, a port mirroring function provided in network equipment is used. The port mirroring function is used for mirroring the total of the packets traversing a physical port irrespective of traffic data. Hence, unneeded packets are simultaneously captured, with the result that it takes time until locating the cause of the network failure, or that the cause may not be located. On the other hand, it is true that data obtained on mirroring can be recorded and displayed in a mirroring terminal connected to a mirroring port. However, since it is necessary to directly connect the mirroring terminal to the mirroring port, there is presented a problem that, if packet capture has to be carried out simultaneously at a plurality of ports, it is necessary to provide a number of mirroring terminals equal to a number of the ports needed.

On the other hand, the Non-Patent Literatures 1, 2 presently go no further than standardizing the function of the OpenFlow controller collecting the flow statistic information (counter) recorded by the individual OpenFlow switches.

The network monitoring device of Patent Literature 1 or the network processing system of Patent Literature 2 is installed at a specified location of the network to capture the packets. It is thus not possible with these known techniques that an arbitrary one of the nodes in the network is selected to capture a packet.

In view of the above depicted status of the art, it is an object of the present invention to provide a communication system including a plurality of nodes and a controller that controls these nodes, as in Non-Patent Literatures 1 and 2, in which a packet flowing through an arbitrary node can be reliably captured without the necessity to provide larger numbers of the above mentioned mirroring terminals beforehand. It is also aimed at by the present invention to provide the controller as well as a method and a program for monitoring the traffic.

### MEANS TO SOLVE THE PROBLEMS

In a first aspect, the present invention provides a communication system comprising a controller and a plurality of nodes. The controller sets a processing rule that stipulates, in each node, a matching rule and processing for a packet matching to the matching rule. Each node processes a packet received in accordance with the processing rule. At least one node is capable of executing mirroring of the packet received. The controller sets, for a flow satisfying a pre-set condition, a processing rule that causes an arbitrary node to perform packet mirroring. The controller also sets, in a node(s) on a packet capture route reaching a pre-set mirror server from the arbitrary node, a processing rule that stipulates the processing to forward a mirrored packet.

In a second aspect, the present invention provides a controller connected to a node set including a node which is capable of executing mirroring of a packet received and which processes the received packet in accordance with a processing rule that stipulates a matching rule and processing for a packet matching to the matching rule. The controller sets, for a flow satisfying a pre-set condition, the processing rule that causes an arbitrary node to execute packet mirroring. The controller also sets, in a node(s) on a packet capture route reaching a pre-set mirror server from the arbitrary node, a processing rule that stipulates a processing to forward a mirrored packet.

In a third aspect of the present invention, there is provided a node that executes mirroring of a packet in accordance with a processing rule as set from the above mentioned controller. The packet belongs to a flow satisfying a pre-set condition.

In a fourth aspect of the present invention, there is provided a method for capturing a packet in a communication system including a controller and a plurality of nodes. The controller sets, in each node, a processing rule that stipulates a matching rule and processing for a packet matching to the matching rule. Each node processes the packet received in accordance with the processing rule. The method comprises a step of setting, for a flow satisfying a pre-set condition, a processing rule that causes an arbitrary node to execute packet mirroring, and a step of setting, in a node(s) on a packet capture route reaching a pre-set mirror server from the arbitrary node, a processing rule that stipulates a processing to forward a mirrored packet. The present method is bound up with a specific machine which is a controller that controls the node(s).

In a fifth aspect of the present invention, there is provided a program executed by a computer forming a controller connected to a node set including a node capable of performing the mirroring of a packet received. Each node processes the received packet in accordance with a processing rule that stipulates a matching rule and processing for a packet matching to the matching rule. The program causes the computer to perform the processing of setting, for a flow satisfying a pre-set condition, the processing rule to cause an arbitrary node to perform packet mirroring, and processing of setting, in the node on a packet capture route reaching a pre-set mirror server from the arbitrary node, the processing rule that stipulates the processing to forward a mirrored packet. The present program may be recorded on a computer-readable recording medium. That is, the present invention may be implemented as a computer program product.

### MERITORIOUS EFFECTS OF THE INVENTION

According to the present invention, it is possible to reliably capture a packet flowing through an arbitrary node without the necessity to implement the above mentioned port mirroring function or to provide larger numbers of the mirroring terminals beforehand.

### BRIEF DESCRIPTION OF THE DRAWINGS

Fig.1 is a schematic view showing an arrangement of an exemplary embodiment 1 of the present invention.
Fig.2 is a block diagram showing a configuration of the exemplary embodiment 1 of the present invention.
Fig.3 is a block diagram showing a configuration of a node of the exemplary embodiment 1 of the present invention.
Fig.4 is a sequence diagram for illustrating the operation of the exemplary embodiment 1 of the present invention.
Fig.5 is a schematic view corresponding to Fig.1 into which a packet capture route is post-entered.
Fig.6 is a sequence diagram for illustrating the operation of the exemplary embodiment 1 of the present invention.
Fig.7 is a sequence diagram continuing to Fig.6.
Fig.8 is schematic view corresponding to Fig.1 in which a user packet forwarding route is post-entered.
Fig.9 is a diagram showing the configuration of a flow entry of the OpenFlow switch of Non-Patent Literatures 1, 2.

### MODES FOR CARRYING OUT THE INVENTION

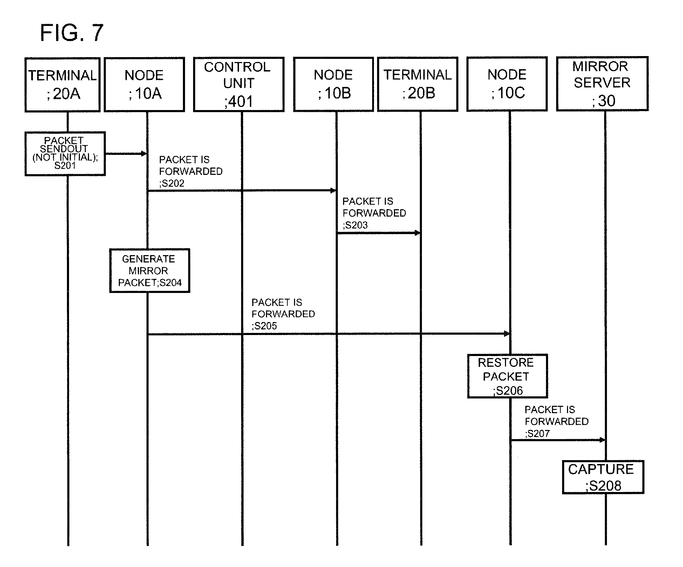

Initially, an outline of an exemplary embodiment of the present invention will be described. The communication system according to the present invention may be implemented by a controller and a plurality of nodes. The controller sets, in each node, a processing rule that stipulates a matching rule and processing for a packet matching to the matching rule. Each node processes a received packet in accordance with the processing rule. At least one node is capable of executing mirroring of the packet received. The controller instructs a node, which is able to perform the packet mirroring and which also is interest to perform packet capture, to perform the mirroring of a packet as the controller specifies pre-set conditions, viz., a port or a header etc., of the packet about to be monitored. Additionally, the controller sets, in a node(s) on the packet capture route getting to a pre-set mirror server, a processing rule that stipulates a processing to forward the mirrored packet (see Fig.7).

In this manner, a packet may be captured in a node where packet capture is needed, by exploiting the node's function to identify a flow or to forward a packet, without the necessity to implement the port mirroring function in the individual nodes or to provide larger numbers of mirroring terminals beforehand.

### [Exemplary embodiment 1]

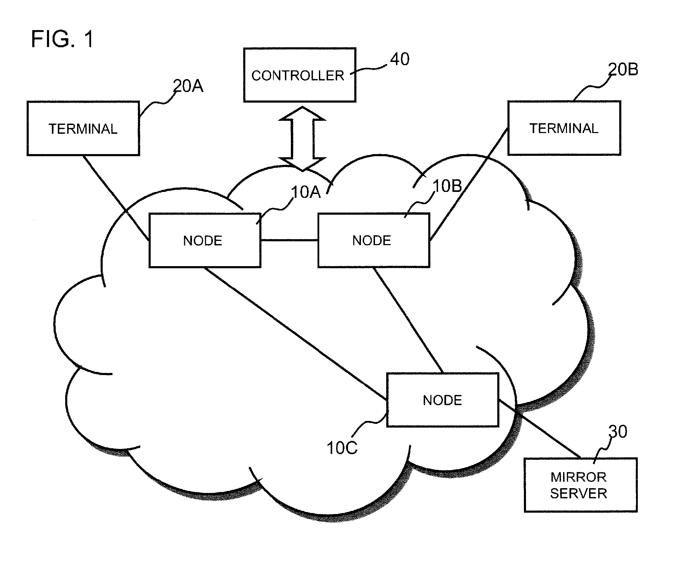

An exemplary embodiment 1 of the present invention will now be discussed in detail with reference to the drawings. Fig.1 illustrates an arrangement of exemplary embodiment 1. Referring to Fig.1, there is shown a communication system including nodes 10A, 10B and 10C and a controller (control apparatus) 40 connected to these nodes 10A to 10C over a control channel to implement packet communication between terminals 20A and 20B. A mirror server 30 that captures a packet received to provide captured results in a variety of modes is connected to the node 10C.

Although Fig.1 shows three nodes and two terminals, the numbers of these devices are only for illustration of the present invention and are not intended for limiting the invention to the numbers shown. It is observed that the arrangement of Fig.1 includes a single mirror server connected to the node 10C. However, two or more mirror servers may be installed or a portion(s) thereof may be connected to the nodes 10A, 10B to balance out the load on the network or the mirror server(s) itself brought about by packet capture.

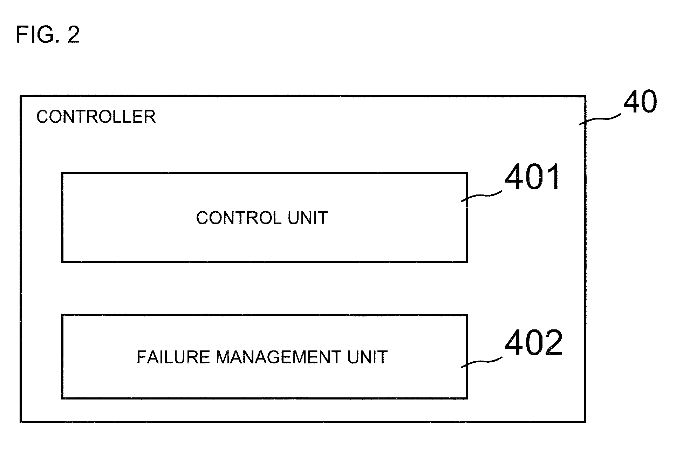

Fig.2 depicts a block diagram showing a detailed configuration of a controller 40. Referring to Fig.2, the controller 40 includes a control unit 401 and a failure management unit 402. The control unit 401 calculates a packet forwarding route between the terminals 20A and 20B based on a network topology representing a interlinked relationship of the nodes 10A to 10C. The control unit also calculates packet capture route(s) getting to the mirror server 30 from an arbitrary node. The control unit also sets a set of processing rules in each of the nodes 10A to 10C to forward packets along the above mentioned routes. The failure management unit 402 manages various faults in the network and, using these faults in the network as a trigger, instructs the control unit 401 to change the route(s) or informs the control unit 401 about the node(s) where packet capture is to be made or about the conditions for packet capture.

It is observed that the controller 40 may be implemented by the configuration of the OpenFlow controller of the Non-Patent Literatures 1 and 2 provided that the configuration includes certain additional functions. These are a function to calculate the route for packet capture as later described, a function to instruct packet mirroring to the node that performs packet capture, and a function to compose and set the processing rules to forward and restore the mirrored packet(s).

The various parts (units; processing means) of the controller 40 shown in Fig.2 may be implemented by a computer program that causes a computer making up the controller 40 to execute the processing for the above mentioned packet capture using the computer hardware.

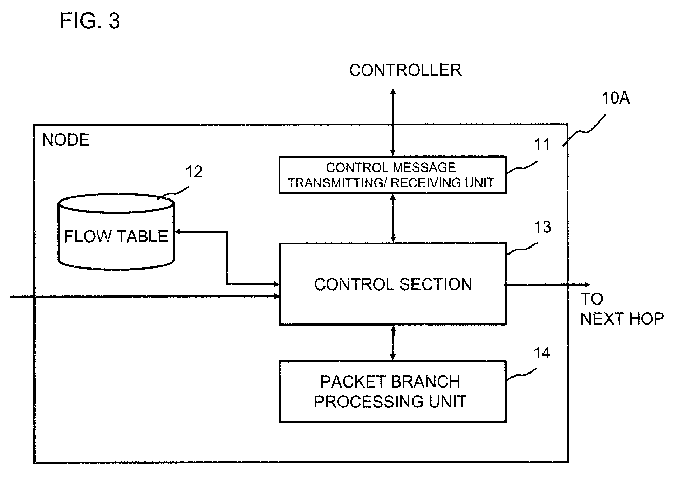

Fig.3 depicts a block diagram showing a detailed configuration of the node 10A. Referring to Fig.3, the node 10A includes a control message transmitting/ receiving unit 11, communicating with the controller 40, a flow table 12, storing the processing rules (flow entries) shown in Fig.9, a control section 13 and a packet branch processing unit 14 that performs packet mirroring. The control section 13 is operative to add a new processing rule (a new flow entry) to the flow table 12 under a command from the controller 40 as well as to search a processing rule (flow entry) having a matching rule matching to the received packet from the flow table 12 to execute a relevant action including a mirroring command to the packet branch processing unit 14.

The nodes 10A to 10C, having the above configurations, are operative to relay packets exchanged between the terminals 20A and 20B, as well as to forward the packets as packet capture target to the mirror server 30.

It is observed that the above mentioned node 10A may be implemented by a configuration corresponding to the configuration of the OpenFlow switch of Non-Patent Literatures 1, 2 with addition of the above mentioned packet branch processing unit 14. In Fig.3, the configuration of the node 10A is shown, however, the nodes 10B, 10C may also be of analogous configurations. If, in the nodes 10B, 10C, the packet capture function is unneeded, the packet branch processing unit 14 may be dispensed with.

The packet branch processing unit 14 of the node 10A, shown in Fig.3, may be implemented by a computer program that causes a computer forming the node 10A to execute packet mirroring using the computer hardware. However, if it is necessary to suppress the influences on the user packet forwarding performance, the packet branch processing unit 14 is desirably implemented by packet duplicating hardware.

The mirror server 30 is a server which stores a packet(s) captured in the nodes 10A to 10C of the network, and which provides analyzed results in a variety of forms as does the above mentioned mirroring terminal, via the node 10C.

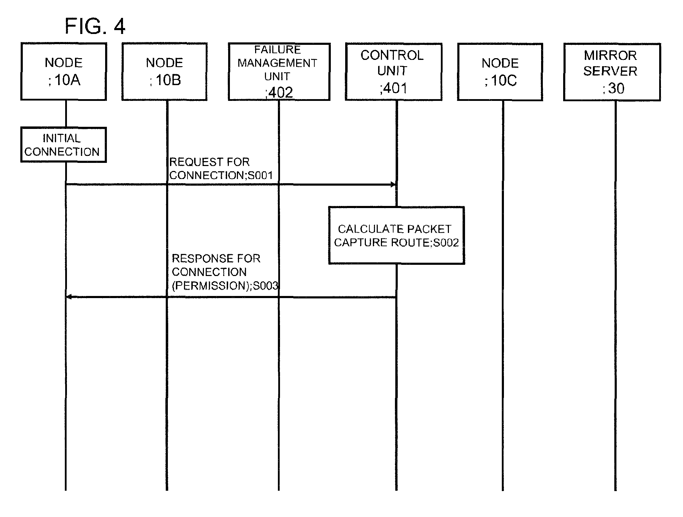

The operation of the present exemplary embodiment will now be explained in detail with reference to the drawings. Fig.4 depicts a sequence diagram showing a flow until a packet capture route is set for a case in which a node 10A has newly been connected to a network to which the nodes 10B, 10C have already been connected.

If the node 10A requests the control unit 401 of the controller 40 to connect it to the network (step S001), and the control unit 401 intends to permit connecting the node 10A as a network's component element, the control unit 401 calculates a packet capture route from the node 10A to the node 10C (step S002). After saving the packet capture route calculated, the controller 40 sends out a connection response (permission) to the node 10A (step S003).

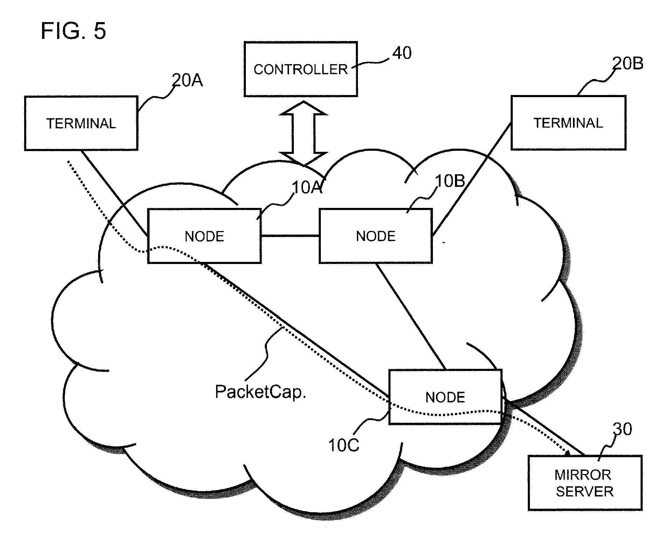

In this manner, the packet capture route from the nodes 10A, 10B and 10C in the network to the mirror server 30 is calculated beforehand, as shown in Fig.5. It is of course possible to omit the sequence of Fig.4 to calculate the packet capture route each time a user packet is received, as shown in Figs.5 ff., in order to set the processing rule in each node.

In the explanation of Fig.4 example, it is presupposed that the node 10A requests the control unit 401 of the controller 40 to connect it to the network. It is however possible for the control unit 401 of the controller 40 to positively collect the network topology based on the function such as the LLDP (Link Layer Discovery Protocol) function to calculate the packet capture route to set the processing rule in each node. In case the network topology has changed due to malfunctions in the nodes 10A to 10C, the control unit 401 may, of course, re-calculate the packet capture route.

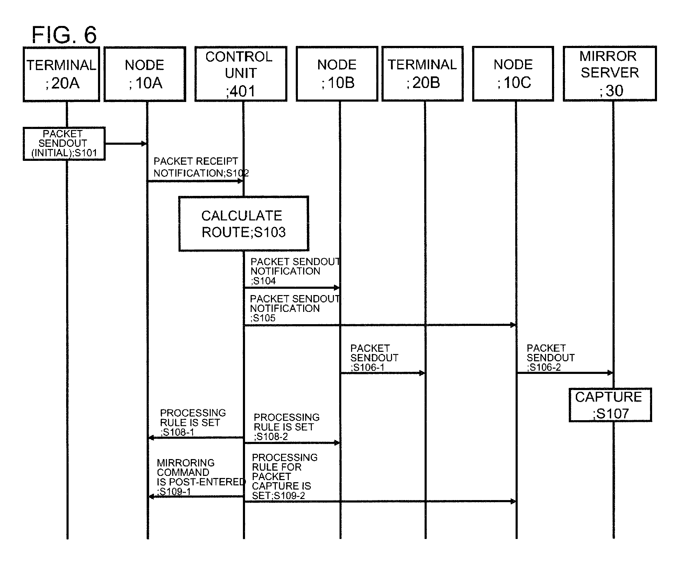

Figs.6, 7 depict sequence diagrams showing the operation in which a packet has been sent out to the terminal 20B connected to the network from the terminal 20A also connected to the network.

Referring to Fig.6, the terminal 20A initially sends out to the node 10A a packet addressed to the terminal 20B (step S101). The node 10A references the flow table 12 to search for the processing rule (flow entry) including a matching rule matched to the received packet. The packet sent is the packet the terminal 20A sent to the terminal 20B for the first time, and hence no processing rule (flow entry) has been registered in the flow table 12. The node 10A thus sends a packet receipt notification (Packet-In) to the controller 40 to request the controller to calculate a route on which to forward the received packet (step S102).

On reception of the packet receipt notification (Packet-In), the controller 40 references the network topology to calculate a packet forwarding route on which the packet is to be forwarded from the node 10A to the terminal 20B (step S103). It is supposed here that the path the controller 40 has calculated is such a route on which the packet is forwarded from the node 10A to the node 10B and thence to the terminal 20B.

When the packet forwarding route on which the packet is to be forwarded has been calculated with success, the controller 40 sends to the node 10B the packet received from the node 10A, with a command to output the packet via a port of the node 10B connected to the terminal 20B (step S104), by way of a packet sendout notification (Packet-Out).

In case the received packet is a packet capture target packet, the controller 40 sends out the packet, received from the node 10A, to the node 10C as well, with a command to output the packet via a port of the node 10C connected to the mirror server 30 (step S105), by way of a packet sendout notification (Packet-Out).

On receipt of the packet sendout notification (Packet-Out), the nodes 10B, 10C output the packets, received from the controller 40, via specified ports (steps S106-1, S106-2). In this manner, the packets, sent from the terminal 20A, are delivered to the terminal 20B and to the mirror server 30. The mirror server 30 captures the received packet (step S107).

To forward a succeeding packet on the calculated route on which to forward a user packet, the controller 40 sets a processing rule in each of the nodes 10A and 10B (steps S108-1, S108-2).

To initiate mirroring and packet header rewriting of the succeeding packet, the controller 40 commands the node 10A to carry out mirroring and packet header rewriting of the succeeding packet as the controller specifies the packet header or the like of the received packet (step S109-1). This command for packet mirroring and packet header rewriting may be implemented by post-entering the processing contents (packet mirroring and packet header rewriting) as action in the processing rule (flow entry) as set in step S108-1 and as now registered in the flow table 12 of the node 10A.

The controller 40 also sets, in the node 10C, the processing rule for packet forwarding on a pre-calculated packet capture route and for restoration of the packet header, that is, for restoration to the contents of the packet header that obtained before rewriting with the processing rule of step S109-1 (step S109-2).

If thereafter the terminal 20A sends out the succeeding packet, addressed to the terminal 20B, to the node 10A (step S201), as shown in Fig.7, the node 10A references the flow table 12 to search for a processing rule (flow entry) having a matching rule matching to the received packet. Since the relevant processing rule here has been set in step S108-1 of Fig.6, the node 10A sends out the succeeding packet to the node 10B under the processing rule as searched (step S202).

The node 10B that has received the succeeding packet also references the flow table 12 to search for a processing rule (entry) having a matching rule matching to the received packet. Since here the relevant processing rule has been set in step S108-2 of Fig.6, the node 10B sends out the succeeding packet to the terminal 20B under the processing rule as searched (step S203).

The node 10A rewrites the packet header of the succeeding packet so as to indicates that the packet in question is the predetermined packet capture target packet, in accordance with the processing contents (action) post-entered in step S109-1 (step S204). The node 10A then sends out the so rewritten packet to the node 10C (step S205).

On reception of the rewritten packet, the node 10C references the flow table 12 to search a processing rule (flow entry) having a matching rule matched to the received packet. Here, the packet header of the succeeding packet, as set in step S109-2, is restored to the original packet header, that is, the packet header of contents that obtained before rewriting at step S204 (step S206). The processing rule for sending out the packet to the mirror server 30 is then searched, and the packet, as restored, is sent out to the mirror server 30 (step S207). The mirror server 30 captures the received packet (step S208).

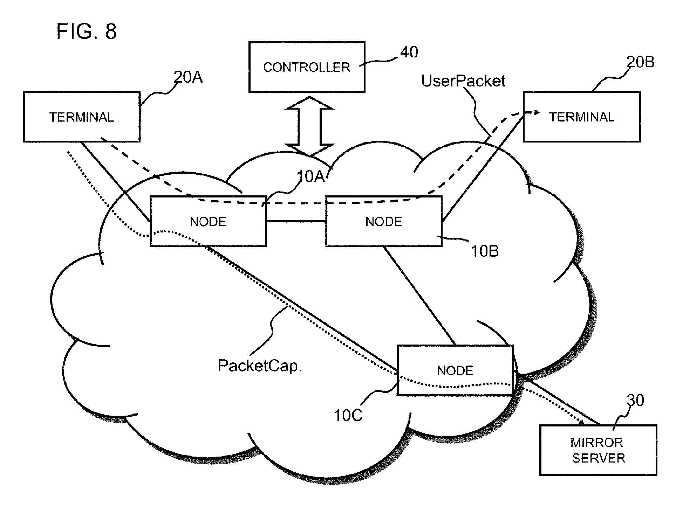

It is seen from the above that, as shown in Fig.8, not only user packet forwarding between the terminals 20A and 20B, as indicated by a broken line of Fig.8, but also packet capture in an arbitrary node, as indicated by a dotted line, of Fig.8, may be implemented.

Moreover, in the present exemplary embodiment, the packet header is changed in node 10A where packet capture is to be performed. Additionally, the packet header, thus changed, is restored to the original packet header in the node 10C as the terminal of the packet capture route. Hence, the packets mirrored at a plurality of nodes may be captured without affecting the packet capture program being run on the mirror server 30. It is observed that, if the network is of such a topology that there is no risk of overlapped setting in one node of the processing rule for user packet forwarding and that for packet capture, packet header rewriting may be dispensed with. The same applies for a case where the node is configured for executing the processing contents (actions) corresponding to the respective processing rules.

In the present exemplary embodiment, described above, any arbitrary traffic, transmitted over the network, may be captured in a concentrated manner using the mirror server 30. The arbitrary traffic may be a packet that is not dependent on the ports or the node sites present in the network. For example, just service type dependent packets, such as a packet from a given terminal to a given application, may be captured.

In this manner, packet flow or timing thereof may readily be confirmed on the network level, thus contributing to more facilitated identification of causes of network faults or excess loads. Moreover, the controller 40 may be configured for periodically collecting the network's statistic information from the nodes 10A to 10C, so that, if symptoms for possible faults are detected from sudden changes or congestion in the traffic, the failure management unit 402 automatically captures the packet or packets involved in the possible faults. By so doing, it is possible to promptly identify network faults or causes of excess loads.

In addition, as subsidiary advantageous effects, it is possible to prolong the mean time between failures (MTBF) and to reduce the mean time to repair (MTTR) of the network to improve its reliability.

The controller 40 may be configured to exploit these results to change the forwarding routes for the user packets.

Although the description has been made of preferred exemplary embodiments of the present invention, such exemplary embodiments are given only by way of illustration and not intended to limit the scope of the invention. That is, any further modifications, substitutions or adjustments may be made without departing from the basic technical concept of the invention. For example, in the above described exemplary embodiments, it is determined, at the time of receiving a user packet, whether or not it is a flow as a packet capture target packet, and a processing rule for packet capture is accordingly set. However, if a node or a port, where packet capture is to be executed, has been determined beforehand, the processing rule for the packet capture can be set in a node on the packet capture route after step S103 of Fig.6. In this case, steps S109-1 and S109-2 may be omitted.

Also, in the above described exemplary embodiments, the case of packet capture in the network composed by the nodes 10A to 10C has been shown and described. However, in a system in which a virtual network is constructed by the nodes 10A, 10B and 10C and virtual services are rendered for the user based on the behavior of the nodes 10A to 10C, for example, packet capture may again be executed and analyzed at an arbitrary node (physical node).

Also, the arrangements described in the above exemplary embodiment are based on the technologies of the Non-Patent Publications 1 and 2. However, the present invention is not limited to the exemplary embodiments described insofar as the component parts used exhibit equivalent functions. For example, the node is not limited to the OpenFlow switch shown in the Non-Patent Publications 1 and 2 and may also be implemented by a router in an IP network or by an MPL switch in an MPLS (Multi-Protocol Label Switching) network.

Certain preferred modes of the present invention may be summarized below.
[MODE 1]
   (See the communication system according to the first aspect)
[MODE 2]
   The communication system according to mode 1, wherein, the controller causes the node, where the processing rule to perform the mirroring has been set, to rewrite a header of the mirrored packet into contents corresponding to the processing rule set in the node on the packet capture route; the controller causing a terminal node on the packet capture route to restore the rewritten packet header.
[MODE 3]
   The communication system according to mode 1 or 2, wherein, the controller re-calculates the packet capture route in response to a change in the network topology composed by the nodes.
[MODE 4]
   The communication system according to any of modes 1 to 3, wherein, the controller includes a failure management unit that decides on the node and the packet, where packet capture is performed, based on the network statistic information as collected from the nodes.
[MODE 5]
   (See the controller according to the second aspect)
[MODE 6]
   The controller according to mode 5, wherein, the controller causes the node, where the processing rule for mirroring has been set, to rewrite a header of the mirrored packet into contents corresponding to the processing rule as set in the node on the packet capture route; the controller causing a terminal node on the packet capture route to restore the rewritten packet header.
[MODE 7]
   The controller according to mode 5 or 6, wherein, the packet capture route is re-calculated in response to changes in a network topology composed by the nodes.
[MODE 8]
   The controller according to any one of modes 5 to 7, comprising a failure management unit that decides on the node and the packet, for which packet capture is performed, based on a network statistic information as collected from the nodes.
[MODE 9]
   (See the node according to the third aspect)
[MODE 10]
   (See the method for capturing a packet according to the fourth aspect)
[MODE 11]
   (See the program according to the fifth aspect)
It is observed that modes 10 and 11 may be extended like mode 1 extended by modes 2 to 4.
The exemplary embodiments may be modified or adjusted within the scope of the entire disclosure of the present invention, inclusive of claims, based on the fundamental technical concept of the invention. Further, variegated combinations or selection of elements disclosed herein may be made within the context of the claims. That is, the present invention may encompass various modifications or corrections that may occur to those skilled in the art within the gamut of the entire disclosure of the present invention, inclusive of claim and the technical concept of the invention.

### [Reference Signs List]

- 10A, 10B, 10C: nodes
- 11: control message transmitting/ receiving unit
- 12: flow table
- 13: control section
- 14: packet branch processing unit
- 20A, 20B: terminals
- 30: mirror server
- 40: controller
- 401: control unit
- 402: failure management unit

## Claims

1. A communication system, comprising:
a controller; and
a plurality of nodes;
the controller setting, in each node, a processing rule that stipulates a matching rule and processing for a packet matching to the matching rule; each node processing a packet received in accordance with the processing rule;
at least one of the node being capable of executing mirroring of the packet received; the controller setting, for a flow satisfying a pre-set condition, the processing rule that causes an arbitrary node to perform packet mirroring; the controller setting, in a node(s) on a packet capture route reaching a pre-set mirror server from said arbitrary node, a processing rule that stipulates a processing to forward a mirrored packet.

2. The communication system according to claim 1, wherein
the controller causes the node, where the processing rule for mirroring has been set, to rewrite a header of the mirrored packet into contents corresponding to the processing rule set in the node on the packet capture route;
the controller causing a terminal node on the packet capture route to restore the rewritten packet header.

3. The communication system according to claim 1 or 2, wherein
the controller re-calculates the packet capture route in response to a change in the network topology composed by the nodes.

4. The communication system according to any one of claims 1 to 3, wherein
the controller includes a failure management unit that decides on the node and the packet, for which packet capture is performed, based on the network statistic information as collected from the nodes.

5. A controller, wherein said controller is connected to a node set including a node which is capable of executing mirroring of a packet received and which processes the received packet in accordance with a processing rule that stipulates a matching rule and processing for a packet matching to the matching rule; and
the controller sets, for a flow satisfying a pre-set condition, a processing rule that causes an arbitrary node to execute packet mirroring; the controller also setting, in a node(s) on a packet capture route reaching a pre-set mirror server from the arbitrary node, a processing rule that stipulates a processing to forward a mirrored packet.

6. The controller according to claim 5, wherein,
the controller causes the node, where the processing rule for mirroring has been set, to rewrite a header of the mirrored packet into contents corresponding to the processing rule as set in the node on the packet capture route;
the controller causing a terminal node on the packet capture route to restore the rewritten packet header.

7. The controller according to claim 5 or 6, wherein,
the packet capture route is re-calculated in response to change in a network topology composed by the nodes.

8. The controller according to any one of claims 5 to 7, comprising
a failure management unit that decides on the node and the packet, for which packet capture is performed, based on network statistic information as collected from the nodes.

9. A method for capturing a packet in a communication system including a controller and a plurality of nodes;
the controller setting, in each node, a processing rule that stipulates a matching rule and processing for a packet matching to the matching rule; each node processing the packet received in accordance with the processing rule; the method comprising steps of:
setting, for a flow satisfying a pre-set condition, the processing rule that causes an arbitrary node to execute packet mirroring; and
setting, in the node on a packet capture route reaching a pre-set mirror server from the arbitrary node, a processing rule that stipulates a processing to forward a mirrored packet.

10. A program executed by a computer, wherein said computer forms a controller connected to a node set including a node capable of performing the mirroring of a packet received; the node processing the received packet in accordance with a processing rule that stipulates a matching rule and processing for a packet matching to the matching rule; wherein
the program causes the computer to perform a processing of setting, for a flow satisfying a pre-set condition, a processing rule that causes an arbitrary node to execute packet mirroring; and
a processing of setting, in a node(s) on a packet capture route reaching a pre-set mirror server from the arbitrary node, a processing rule that stipulates a processing to forward a mirrored packet.
